# FASCICULE DE BREVET EUROPEEN

(11) **EP 2 920 076 B1**
(45) Date de publication et mention de la délivrance du brevet: **05.09.2018**
(21) Numéro de dépôt: 13795843.5
(22) Date de dépôt: 07.11.2013
(51) Int. Cl.: B64D 13/08, B64D 13/06

(54) **PROCÉDÉ ET SYSTÈME DE CONDITIONNEMENT D'AIR POUR AÉRONEF**
LUFTKONDITIONIERUNGSVERFAHREN UND SYSTEM FÜR EIN FLUGZEUG
AIR CONDITIONING METHOD AND SYSTEM FOR AIRCRAFT

(30) Priorité: 19.11.2012 FR 1260988
(43) Date de publication de la demande: 23.09.2015
(73) Titulaire: Safran Helicopter Engines, 64510 Bordes (FR)
(72) Inventeur: HOUSSAYE, Laurent, 64110 Saint Faust (FR)
(74) Mandataire: Gevers & Orès
(86) Numéro de dépôt international: PCT/FR2013/052661
(87) Numéro de publication internationale: WO 2014/076391

(56) Documents cités:
- EP-A1- 1 388 492
- EP-A2- 2 165 931
- US-A1- 2002 166 923
- US-A1- 2012 240 599

## Description

### DOMAINE DE L'INVENTION

L'invention se rapporte au domaine du conditionnement d'air dans les aéronefs et plus particulièrement au conditionnement de l'air destiné à l'alimentation de la cabine pressurisée d'un aéronef. L'invention concerne plus particulièrement un système et un procédé de conditionnement d'air pour un aéronef ainsi qu'un aéronef comprenant un tel système. Des exemples de l'art antérieur sont fournis par les documents EP2165931 et US2012/0240599.

### ÉTAT DE LA TECHNIQUE

En altitude de croisière d'un l'aéronef, par exemple à 10000 mètres d'altitude, la pression de l'air ambiant extérieur est, en général, d'environ 0,2 à 0,3 bar et sa température comprise entre -20 et -60°C alors que la pression dans la cabine pressurisée de l'aéronef est d'environ 0,8 bar et la température en entrée du module de climatisation de la cabine d'environ -15°C.

Afin d'approvisionner la cabine pressurisée en air, il est connu de prélever de l'air au niveau des moteurs principaux afin de le conditionner puis de l'acheminer jusqu'à un module de climatisation de la cabine.

Un flux d'air comprimé, à pression et température élevées, est ainsi prélevé sur les étages de compresseurs des moteurs principaux puis est ensuite refroidi à travers un pré-refroidisseur (pre-cooler en langue anglaise) à la sortie duquel sa pression est d'environ 2 bars et sa température d'environ 200°C. Cet air est alors à nouveau refroidi et à la fois asséché et détendu dans un module de refroidissement à la sortie duquel sa pression est proche de celle de la cabine, environ 0,8 bar, et sa température est d'environ -15°C. L'air ainsi conditionné est ensuite acheminé jusqu'au module de climatisation de la cabine de l'aéronef pour en assurer la régulation thermique et l'alimentation en air frais. Un tel système présente cependant plusieurs inconvénients.

Tout d'abord, la pression de l'air prélevé étant élevée, l'air doit subir une détente de sorte à atteindre le niveau de pression requis en entrée du module de climatisation de la cabine de l'aéronef. Une telle détente nécessite d'utiliser un module de refroidissement comprenant un turbocompresseur et une pluralité d'échangeurs de chaleur qui sont consommateurs d'énergie et qui complexifient la structure du système, ce qui présente un premier inconvénient.

De plus, le pré-refroidisseur d'un tel système nécessite un prélèvement d'air supplémentaire, à faible température, pour refroidir l'air chaud prélevé au niveau des étages des compresseurs des moteurs principaux de l'aéronef. Une telle multiplicité des prélèvements d'air à différents endroits de l'aéronef complexifie le système de conditionnement d'air et donc la structure interne de l'aéronef, ce qui en augmente la trainée et la consommation en carburant et présente un deuxième inconvénient.

Un tel système rend en outre complexe l'installation et l'opérabilité des moteurs principaux et peut en diminuer les performances, ce qui présente un troisième inconvénient.

Par ailleurs, le prélèvement d'air au niveau des étages de compresseurs des moteurs principaux diminue d'autant la quantité d'air utilisable pour la propulsion de l'aéronef, ce qui augmente la consommation de carburant et présente donc un quatrième inconvénient.

Enfin, la variabilité du régime moteur impose un système complexe pour assurer un niveau minimum invariable de prélèvement d'air, ce qui présente un cinquième inconvénient.

### EXPOSÉ DE L'INVENTION

L'invention vise à améliorer les systèmes existants de conditionnement d'air pour aéronef de sorte à économiser l'énergie de l'aéronef et simplifier le conditionnement d'air et plus généralement la structure de l'aéronef.

Ainsi, l'invention a pour objet un système de conditionnement d'air pour une cabine pressurisée d'un aéronef selon la revendication 1.

Par les termes « air ambiant extérieur », on entend de l'air libre extérieur à l'aéronef, par opposition à de l'air circulant dans les moteurs de l'aéronef.

L'air ainsi refroidi peut ensuite être acheminé jusqu'à un module de climatisation de la cabine de l'aéronef qui va ensuite ajuster la température du flux d'air en fonction des réglages de la cabine afin d'alimenter celle-ci en air frais.

Le module de compression permet de comprimer l'air ambiant prélevé à l'extérieur de l'aéronef, dont la pression et la température sont généralement inférieures aux niveaux de pression et de température requis en entrée du module de climatisation de la cabine. Une telle compression permet d'augmenter la pression de l'air jusqu'au niveau de pression requis dans la cabine, par exemple 0,8 bar. La pression de l'air ambiant extérieur prélevé étant de l'ordre de 0,2 ou 0,3 bar, le taux de compression associé à une telle compression pour obtenir une pression proche du niveau requis en cabine, par exemple 0,8 bar, est faible, par exemple de l'ordre de 3 ou 4, et nécessite donc peu d'énergie. La compression peut être réalisée jusqu'à une valeur légèrement supérieure à la pression requise en cabine, par exemple 0,9 bar, de sorte à prévoir la diminution de pression de l'air liée aux pertes de charge entre le module de compression d'air et le module de climatisation de l'aéronef.

Lorsque la compression augmente la température de l'air prélevé au-delà du niveau requis en entrée du module de climatisation de la cabine, le module de refroidissement reçoit et refroidit alors le flux d'air comprimé jusqu'au niveau de température requis en entrée du module de climatisation de la cabine, par exemple -15° C. L'air refroidi est ensuite fourni au module de climatisation de l'aéronef pour assurer la régulation thermique et l'alimentation en air frais de la cabine pressurisée de l'aéronef.

Le système selon l'invention prélève uniquement de l'air ambiant extérieur. Il n'est donc plus nécessaire de prélever de l'air au niveau des étages de compresseurs des moteurs principaux, ce qui permet d'en améliorer l'efficacité et de rendre le système de conditionnement d'air indépendant des variations du régime moteur de l'aéronef. En particulier, et contrairement aux solutions existantes, le module de prélèvement d'air du système selon l'invention peut ainsi comprendre un unique moyen de prélèvement d'air qui peut être constitué, par exemple, d'une entrée d'air dynamique ou bien d'une vanne commandable.

En outre, il n'est plus nécessaire de multiplier les prélèvements d'air à différentes températures et à différents endroits de l'aéronef, ce qui en simplifie l'architecture et permet d'en réduire la trainée et donc la consommation en carburant.

La structure d'un tel système est simple et permet notamment d'éviter l'utilisation d'un turbocompresseur et d'une pluralité d'échangeurs de chaleur pour refroidir l'air. L'installation, l'opérabilité et la maintenance des moteurs sont en outre rendues plus aisées.

Les moyens de stockage de fluide de refroidissement sont ainsi rechargeables aisément, par exemple, lors de la maintenance de l'aéronef. Un tel accumulateur de froid permet de réduire la température d'un premier flux d'air sans nécessité de prélever un second flux d'air ambiant extérieur. De plus, l'air est comprimé jusqu'à la valeur requise en cabine ou légèrement au-dessus pour compenser les pertes de charge dans le système, limitant de manière importante l'énergie nécessaire pour cette compression, le refroidissement est donc obtenu sans détente de l'air, ce qui simplifie la structure du système en évitant l'utilisation d'un module de détente.

De préférence, le module de refroidissement est autonome. Par le terme « autonome », on entend que le refroidissement de l'air est réalisé uniquement au moyen du fluide de refroidissement stocké dans les moyens de stockage, c'est-à-dire sans utiliser de fluide provenant d'une autre source.

Selon une caractéristique de l'invention, les moyens de stockage de fluide de refroidissement sont configurés pour stocker un fluide à basse température, par exemple inférieure à -180°C, permettant de refroidir le flux d'air comprimé.

Selon une caractéristique de l'invention, le fluide de refroidissement est un fluide cryogénique, de préférence un liquide cryogénique.

Selon une caractéristique de l'invention, les moyens de stockage de fluide de refroidissement se présentent sous la forme d'un réservoir de fluide cryogénique. Un tel fluide cryogénique peut, par exemple, être de l'azote liquide, de l'air liquide, de l'hélium liquide etc.

Avantageusement, le module de refroidissement est configuré pour délivrer un fluide gazeux, par exemple de l'azote gazeux sous pression, de préférence dont la température est inférieure à celle du flux d'air comprimé, pouvant alimenter une turbine et fournir ainsi une énergie mécanique.

Selon un aspect de l'invention, le système comprend un module d'échange calorifique, par exemple un échangeur de chaleur, disposé entre le module de compression d'air et le module de refroidissement, configuré pour refroidir le flux d'air comprimé, reçu du module de compression d'air, à partir du flux de fluide gazeux délivré par le module de refroidissement, et acheminer, d'une part, le flux d'air comprimé ainsi refroidi vers le module de refroidissement et, d'autre part, le flux de fluide gazeux vers un module de chauffage. Une telle boucle permet d'utiliser l'énergie calorique du fluide gazeux délivré par le module de refroidissement afin d'effectuer, à travers l'échangeur de chaleur, un pré-refroidissement du flux d'air comprimé.

Selon un aspect de l'invention, le système comprend un module d'orientation d'un flux d'air disposé entre le module de compression et le module de refroidissement et configuré pour orienter le flux d'air, comprimé par le module de compression d'air, vers le module de refroidissement d'air, lorsque la température de l'air comprimé est supérieure à la température requise en entrée du module de climatisation de la cabine, ou vers un module de chauffage, lorsque la température de l'air comprimé est inférieure à la température requise en entrée du module de climatisation de la cabine.

De préférence, le module d'orientation d'un flux d'air se présente sous la forme d'une vanne deux voies.

De préférence encore, le système comprend un module de chauffage configuré pour recevoir un flux de fluide gazeux à réchauffer, par exemple, provenant du module d'échange calorifique ou bien un flux d'air provenant du module d'orientation d'un flux d'air.

Selon une caractéristique de l'invention, le module de chauffage est configuré pour acheminer l'air réchauffé vers le module de climatisation de la cabine ou vers une turbine.

Avantageusement, le système comprend une turbine configurée pour recevoir, du module de chauffage, le flux de fluide gazeux et pour alimenter, par exemple, un générateur pour produire du courant électrique, par exemple, pour alimenter des appareils de l'aéronef. Le flux sortant d'une telle turbine peut aussi permettre de refroidir la ou les baies moteur de l'aéronef (une baie moteur étant l'enceinte dans laquelle est installée un moteur), et/ou d'en rendre l'atmosphère inerte, diminuant ainsi fortement le risque d'incendie. La récupération du fluide gazeux délivré par le module de refroidissement permet donc de produire de l'énergie supplémentaire à faible coût.

De préférence, le module de compression est un compresseur de charge, par exemple d'une unité auxiliaire de puissance (APU, Auxiliary Power Unit en langue anglaise).

Selon une caractéristique de l'invention, le module de refroidissement comprend un condenseur configuré pour condenser l'eau du flux d'air, un extracteur d'eau configuré pour extraire ladite eau, un refroidisseur configuré pour refroidir le flux d'air sec et un réservoir d'un fluide de refroidissement, par exemple un liquide cryogénique tel que de l'azote liquide, de l'air liquide, de l'hélium liquide etc, configuré pour autoriser la condensation de l'eau du flux par le condenseur et le refroidissement du flux asséché par le refroidisseur, par exemple jusqu'à des températures négatives sans risque de colmatage par du givre.

Avantageusement, le module de refroidissement est configuré pour déshumidifier le flux d'air comprimé reçu.

Selon une caractéristique de l'invention, le module de chauffage est un récupérateur thermique, par exemple un échangeur de chaleur.

L'invention concerne aussi un aéronef comprenant un système de conditionnement d'air tel que défini ci-dessus.

L'invention concerne aussi un procédé de conditionnement d'air dans un aéronef tel que défini ci-dessus comprenant une cabine pressurisée et un module de climatisation de ladite cabine, ledit procédé étant remarquable en ce qu'il comprend :
- une étape de prélèvement d'air ambiant extérieur à l'aéronef,
- une étape de compression du flux d'air prélevé,
- une étape de refroidissement du flux d'air comprimé par un fluide cryogénique,
- une étape d'acheminement du flux d'air ainsi refroidi vers le module de climatisation de la cabine de l'aéronef.

De préférence, le procédé comprend, entre les étapes de compression et de refroidissement, une étape d'orientation du flux d'air, comprimé par le module de compression d'air, vers le module de refroidissement d'air, lorsque la température de l'air comprimé est supérieure à la température requise en entrée du module de climatisation de la cabine, ou vers un module de chauffage, lorsque la température de l'air comprimé est inférieure à la température requise en entrée du module de climatisation de la cabine.

Selon un aspect de l'invention, le procédé comprend en outre une étape d'envoi, par le module de chauffage, d'un flux de fluide de refroidissement gazeux vers une turbine de récupération.

D'autres caractéristiques et avantages de l'invention apparaîtront lors de la description qui suit faite en regard des figures annexées données à titre d'exemples non limitatifs et dans lesquelles des références identiques sont données à des objets semblables :
- la figure 1 représente schématiquement le système de conditionnement d'air selon l'invention ;
- la figure 2 représente schématiquement le module de refroidissement du système de la figure 1 ;

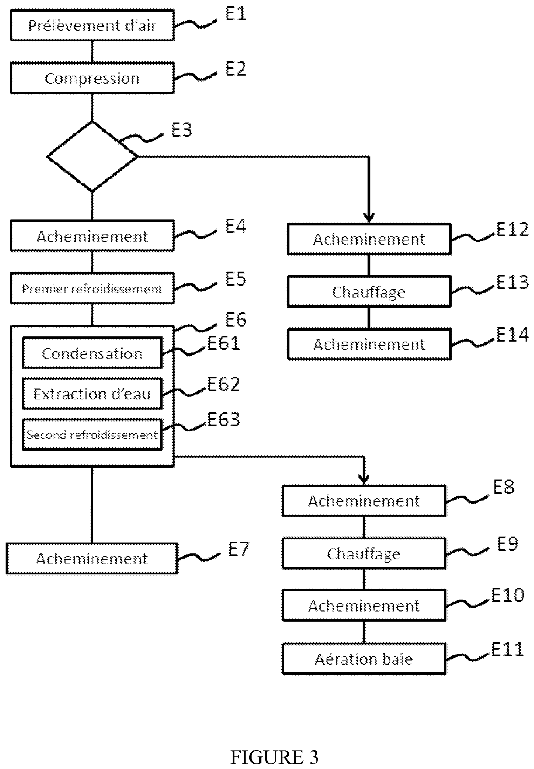

- la figure 3 illustre le procédé de conditionnement d'air selon l'invention.

### DESCRIPTION DETAILLEE

Dans un aéronef, le système de conditionnement d'air permet d'alimenter en air la cabine pressurisée à partir d'air extérieur.

### DESCRIPTION DU SYSTEME SELON L'INVENTION

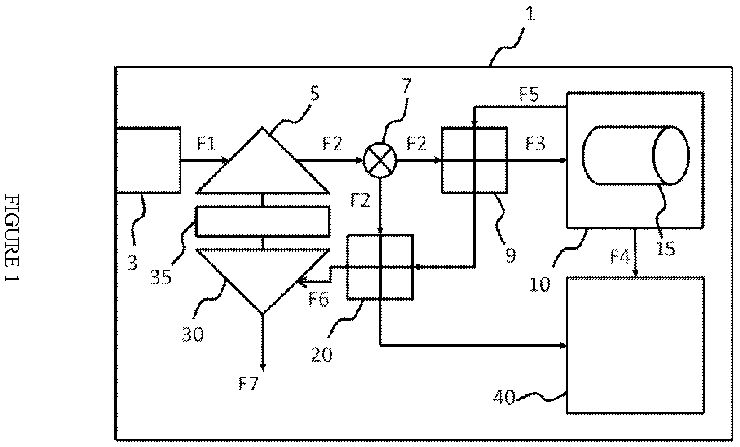

La forme de réalisation du système de conditionnement d'air 1 selon l'invention illustrée à la figure 1 comprend un module de prélèvement d'air 3, un module de compression d'air 5, un module d'orientation d'air 7, un module d'échange calorifique 9, un module de refroidissement 10, un module de récupération thermique 20, une turbine 30 et un module de climatisation 40 de la cabine pressurisée de l'aéronef.

### Module de prélèvement d'air 3

Le module de prélèvement d'air est configuré pour prélever de l'air ambiant à l'extérieur de l'aéronef. Le module de prélèvement d'air 3 comprend une ou plusieurs entrées d'air ambiant extérieur, de préférence une unique entrée d'air, par exemple du type entrée d'air dynamique. Une entrée d'air est dite dynamique (en opposition à une entrée d'air statique) lorsqu'elle est apte à transformer l'énergie cinétique de l'air capté en pression (pression d'arrêt ou pression dynamique). Une telle entrée d'air dynamique peut être celle d'une unité auxiliaire de puissance de l'aéronef (Auxiliary Power Unit ou APU en langue anglaise). Dans une forme de réalisation alternative, le module de prélèvement d'air peut être constitué d'une ou plusieurs vannes commandables de prélèvement d'air.

### Module de compression d'air 5

Le module de compression d'air 5 comprend au moins un compresseur, qui peut être par exemple le compresseur de charge d'une unité auxiliaire de puissance de l'aéronef. Une telle unité comprend usuellement un compresseur de charge 5, et une turbomachine comprenant un moteur ou un générateur 35 et une turbine 30. Le compresseur de charge 5 est configuré pour recevoir le flux d'air F1 prélevé par le module de prélèvement 3, le comprimer et acheminer le flux d'air comprimé F2 jusqu'au module d'orientation d'air 7.

### Module d'orientation de l'air 7

Le module d'orientation d'air 7, par exemple une vanne deux voies, est configuré pour orienter le flux d'air comprimé F2 vers le module d'échange calorifique 9 ou bien vers le module de récupération thermique 20. Le module d'orientation d'air 7 comprend des moyens de mesure de la température du flux d'air comprimé F2 provenant du module de compression d'air 5 et des moyens de comparaison de la valeur mesurée avec une valeur de référence correspondant au niveau requis en entrée du module de climatisation de la cabine 40. Le module d'orientation de l'air 7 est alors configuré pour orienter le flux d'air comprimé F2 vers le module d'échange calorifique 9 afin ensuite de le refroidir lorsque la température mesurée de l'air comprimé est supérieure à celle du niveau requis en entrée du module de climatisation 40. Le module d'orientation de l'air 7 est aussi configuré pour orienter le flux d'air comprimé vers le module de récupération thermique 20 afin de le réchauffer lorsque la température mesurée de l'air comprimé est inférieure à celle du niveau requis en entrée du module de climatisation 40.

### Module d'échange calorifique 9

Le module d'échange calorifique 9 comprend au moins un échangeur de chaleur configuré pour autoriser un échange de chaleur entre le flux d'air comprimé F2 reçu du module d'orientation d'air 7 et un flux de fluide gazeux F5 provenant du module de refroidissement 10.

### Module de refroidissement 10

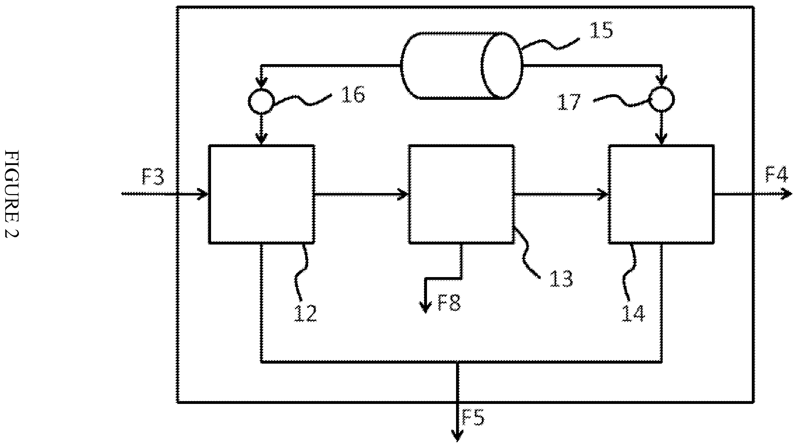

Le module de refroidissement 10 est configuré pour recevoir le flux d'air F3 provenant du module d'orientation d'air 7 et ayant traversé le module d'échange calorifique 9 et pour refroidir ledit flux reçu F3. Comme illustré par la figure 2, le module de refroidissement comprend un condenseur 12, un extracteur d'eau 13, un refroidisseur 14, un réservoir de fluide cryogénique 15, par exemple d'azote liquide pressurisé à 10 bars, une première vanne de régulation 16 disposée entre le réservoir de fluide cryogénique 15 et le condenseur 12 et une seconde vanne de régulation 17 disposée entre le réservoir de fluide cryogénique 15 et le refroidisseur 14. Le condenseur 12 est configuré pour recevoir un flux d'air à refroidir, par exemple un flux d'air comprimé potentiellement humide à une température allant jusqu'à 100°C à la pression de la cabine, par exemple environ 0,8 bar. Le condenseur 12 est aussi configuré pour condenser la vapeur d'eau contenue dans le flux d'air comprimé reçu tout en évitant son givrage en maintenant une température positive à sa sortie. L'extracteur d'eau 13 est configuré pour extraire l'eau du flux d'air, condensée par le condenseur 12, dont le flux d'eau F8 peut ensuite être, par exemple, éliminé ou bien injecté dans un circuit d'eau de l'aéronef. Le refroidisseur 14 est configuré pour refroidir le flux d'air sec reçu de l'extracteur d'eau 13 à partir de fluide cryogénique reçu du réservoir 15 à travers la seconde vanne de régulation 17 et pour acheminer le flux d'air froid et sec F4 obtenu vers le module de climatisation 40 de la cabine. Le fluide cryogénique liquide stocké dans le réservoir est ainsi utilisé à la fois par le condenseur 12 et à la fois par le refroidisseur 14. Le fluide de refroidissement passé sous forme gazeuse après les échanges de chaleur réalisés au niveau du condenseur 12 et du refroidisseur 14 est recyclé en étant acheminé vers le module d'échange calorifique 9 pour refroidir le flux d'air comprimé F2 traversant le module d'échange calorifique 9 et venant du module d'orientation d'air 7.

### Module de chauffage 20

Le module de chauffage 20 peut se présenter sous la forme d'un récupérateur thermique, par exemple disposé dans l'échappement de l'unité auxiliaire de puissance (APU). Le module de chauffage 20 est configuré pour, dans un premier mode de fonctionnement, chauffer le flux d'air F2 reçu du module d'orientation d'air 7 et l'acheminer ensuite vers le module de climatisation 40 de la cabine et pour, dans un second mode de fonctionnement, chauffer le flux de fluide de refroidissement gazeux F5 reçu du module d'échange calorifique 9 et l'envoyer vers la turbine 30. Une voie de by-pass de ce module de chauffage peut être prévue pour réguler l'énergie thermique de chauffage du flux d'air F2.

### Turbine 30

La turbine 30 est configurée pour recevoir un flux de fluide gazeux du module de chauffage 20. L'énergie mécanique produite par la turbine 30 à partir du flux de fluide gazeux reçu peut être, par exemple, injectée dans la boite de transmission de l'unité auxiliaire de puissance (APU), ou utilisée pour entrainer un alternateur, ou pour tout autre usage éventuellement plus approprié. Le flux gazeux en sortie F7 peut encore être utilisé pour refroidir la baie moteur de l'aéronef et/ou en rendre inerte l'atmosphère, si ce fluide est de l'azote gazeux par exemple.

### Module de climatisation de la cabine pressurisée de l'aéronef

Le module de climatisation 40 comprend un mélangeur (non représenté) configuré pour recevoir le flux d'air refroidi F4 du module de refroidissement 10 et le mélanger à de l'air de la cabine de sorte à fournir à la cabine un flux d'air à la température de réglage souhaitée.

Le système selon l'invention peut aussi comprendre des moyens de régulation de la pression de la cabine (non représentés) et des moyens de commande configurés pour commander l'un ou l'ensemble des modules du système (module de prélèvement d'air, de compression d'air, d'orientation d'air, de refroidissement, turbine de chauffage de climatisation...).

### MISE EN OEUVRE DU SYSTEME SELON L'INVENTION

Dans une première étape E1, le module de prélèvement d'air 3 prélève de l'air ambiant extérieur et achemine le flux d'air ambiant prélevé F1 vers le module de compression d'air 5.

Dans une étape E2, le module de compression d'air 5 comprime l'air prélevé F1 et envoie le flux d'air comprimé F2 vers le module d'orientation d'air 7.

Dans une étape E3, le module d'orientation d'air 7 détermine si la température du flux d'air comprimé F2 est supérieure ou inférieure à une valeur de référence associée au niveau requis en entrée du module de climatisation 40.

Lorsque la température du flux d'air comprimé est supérieure à la valeur de référence, le module d'orientation d'air 7 achemine, dans une étape E4, le flux d'air comprimé F2 à refroidir vers le module d'échange calorifique 9. Le flux d'air comprimé F2 traverse alors le module d'échange calorifique 9, dans lequel il subit un premier refroidissement, lors d'une étape E5, par un fluide gazeux F5 provenant du module de refroidissement 10. Le flux d'air comprimé F3 est ensuite acheminé jusqu'au module de refroidissement 10 dans lequel il subit un second refroidissement lors d'une étape E6.

Plus précisément, le flux d'air comprimé F3 traverse le condenseur 12, dans une étape E61, au cours de laquelle la vapeur d'eau éventuellement présente dans le flux d'air est condensée. Le condenseur 12 utilise le fluide cryogénique reçu, à travers la première vanne 16, du réservoir 15 de fluide cryogénique pour diminuer la température du flux d'air jusqu'à une température légèrement positive, par exemple 2°C de sorte à permettre la condensation de la vapeur d'eau sans givrage. Le fluide gazeux F5 produit par l'échange de chaleur entre le flux d'air et le fluide cryogénique est alors acheminé vers le module d'échange calorifique 9.

L'eau est ensuite extraite du flux d'air, dans une étape E62, par l'extracteur d'eau 13 puis le flux d'air est acheminé jusqu'au refroidisseur 14 qui alors utilise, dans une étape E63, le fluide cryogénique reçu, à travers la seconde vanne 17, pour diminuer la température du flux d'air sec jusqu'au niveau de température requis en entrée du module de climatisation 40, par exemple -15°C. Le fluide gazeux produit par l'échange de chaleur entre le flux d'air et le fluide cryogénique est aussi acheminé vers le module d'échange calorifique 9.

Le flux d'air froid et sec F4 est alors acheminé, dans une étape E7 jusqu'au module de climatisation de la cabine 40. La température souhaitée en cabine peut alors être obtenue grâce au mélangeur du module de climatisation 40. Par ailleurs, les moyens de régulation de la pression en cabine permettent de maintenir la cabine sous pression, par exemple à 0,8 bar.

Le fluide gazeux F5 issu des échanges de chaleur dans le condenseur 12 et dans le refroidisseur 14 est acheminé via une boucle de rétroaction, lors d'une étape E8, jusqu'au module d'échange calorifique 9 où il sert à effectuer un premier refroidissement du flux d'air comprimé F2 provenant du module d'orientation d'air 7.

Une fois l'échange de chaleur réalisé dans le module d'échange calorifique 9, le flux de fluide gazeux est acheminé jusqu'au module de chauffage 20 qui en augmente la température, dans une étape E9, avant de l'envoyer vers la turbine 30 de l'APU lors d'une étape E10. La turbine 30 peut alors utiliser le flux de fluide gazeux F6 pour, par exemple, alimenter un générateur et produire de l'électricité.

Lorsque la température du flux de fluide gazeux F7 est inférieure à une valeur de référence, par exemple une trentaine de degrés Celsius, le flux peut servir à refroidir la baie moteur de l'aéronef et/ou à en rendre l'atmosphère inerte dans une étape E11.

Lorsque la température du flux d'air comprimé F2 est inférieure à la valeur de référence, le module d'orientation d'air 7 achemine, dans une étape E12, le flux d'air comprimé F2 à réchauffer vers le module de chauffage 20.

Le module de chauffage 20 augmente alors la température du flux d'air lors d'une étape E13 puis l'achemine vers le module de climatisation 40 de la cabine lors d'une étape E14. La température souhaitée en cabine peut alors être obtenue grâce au mélangeur du module de climatisation 40.

Bien entendu, dans une forme simplifiée de réalisation du système selon l'invention, le module d'échange calorifique 9 pourrait être absent et le flux d'air comprimé F2 pourrait alors être acheminé directement du module d'orientation d'air 7 au module de refroidissement 10.

Le système selon l'invention permet donc de comprimer un flux d'air prélevé dans l'air ambiant extérieur à l'aéronef jusqu'à une valeur proche de la celle de la pression requise en cabine, par exemple avec un taux de compression de 3 ou 4, qui ne nécessite donc pas beaucoup d'énergie. Le module de refroidissement permet ensuite de refroidir le flux pour en abaisser la température au niveau requis en entrée du module de climatisation de la cabine.

## Revendications

1. Système de conditionnement d'air pour une cabine pressurisée d'un aéronef, ledit système (1) comprenant un module de prélèvement d'air (3) configuré pour prélever de l'air ambiant extérieur à l'aéronef, un module de compression d'air (5) configuré pour comprimer le flux d'air prélevé (F1) et un module de refroidissement d'air (10), **caractérisé en ce que** le module de refroidissement d'air (10) est configuré pour refroidir le flux d'air comprimé (F2, F3) à partir d'un fluide cryogénique , le module de refroidissement (10) comprenant un condenseur (12) pour condenser l'eau du flux d'air, un extracteur d'eau (13) pour extraire ladite eau, un refroidisseur (14) pour refroidir le flux d'air sec issu de l'extracteur d'eau (13) et un réservoir (15) d'un fluide cryogénique par lequel l'eau du flux d'air est condensée dans le condenseur (12) et l'air sec issu de l'extracteur est refroidi dans le refroidisseur (14).

2. Système selon la revendication 1, dans lequel le module de refroidissement (10) est autonome.

3. Système selon l'une des revendications précédentes, dans lequel le module de refroidissement (10) est configuré pour délivrer un fluide gazeux d'alimentation d'une turbine (30) à partir du fluide cryogénique.

4. Système selon l'une des revendications précédentes, ledit système (1) comprenant un module de chauffage (20) configuré pour recevoir, d'un module d'échange calorifique (9), un flux de fluide gazeux (F5) et l'acheminer vers une turbine (30) ou pour recevoir, d'un module d'orientation d'air (7), un flux d'air comprimé (F2) à réchauffer et l'acheminer vers un module de climatisation (40) de la cabine de l'aéronef.

5. Système selon l'une des revendications précédentes, ledit système (1) comprenant un module d'échange calorifique (9), disposé entre le module de compression d'air (5) et le module de refroidissement (10), configuré pour refroidir le flux d'air comprimé (F2), reçu du module de compression d'air (5), à partir du flux de fluide gazeux (F5) délivré par le module de refroidissement (10), et acheminer, d'une part, le flux d'air comprimé ainsi refroidi (F3) vers le module de refroidissement (10) et, d'autre part, le flux de fluide gazeux (F5) vers le module de chauffage (20).

6. Système selon l'une des revendications précédentes, ledit système (1) comprenant un module d'orientation d'un flux d'air (7) disposé entre le module de compression (5) et le module de refroidissement (10) et configuré pour orienter le flux d'air (F2), comprimé par le module de compression d'air (5), vers le module de refroidissement d'air (10), lorsque la température de l'air comprimé est supérieure à la température requise en entrée d'un module de climatisation (40) de la cabine, ou vers le module de chauffage (20), lorsque la température de l'air comprimé est inférieure à la température requise en entrée d'un module de climatisation (40) de la cabine.

7. Aéronef **caractérisé en ce qu'**il comprend un système selon l'une des revendications 1 à 6.

## Patentansprüche

1. Luftkonditionierungssystem für eine Druckkabine eines Flugzeugs, wobei das System (1) ein Luftentnahmemodul (3) umfasst, das konfiguriert ist, um Umgebungsluft außerhalb des Flugzeugs zu entnehmen, ein Luftverdichtungsmodul (5), das konfiguriert ist, um den entnommenen Luftstrom (F1) zu verdichten, und ein Luftkühlmodul (10), **dadurch gekennzeichnet, dass** das Luftkühlmodul (10) konfiguriert ist, um den verdichteten Luftstrom (F2, F3) anhand eines kryogenen Fluids zu kühlen, wobei das Kühlmodul (10) einen Kondensator (12) umfasst, um das Wasser des Luftstroms zu kondensieren, einen Wasserextraktor (13), um das Wasser zu extrahieren, einen Kühler (14), um den vom Wasserextraktor (13) ausgegebenen trockenen Luftstrom zu kühlen, und ein Reservoir (15) eines kryogenen Fluids, durch das das Wasser des Luftstroms im Kondensator (12) kondensiert und die vom Extraktor ausgegebene trockene Luft im Kühler (14) gekühlt wird.

2. System nach Anspruch 1, wobei das Kühlmodul (10) autonom ist.

3. System nach einem der vorstehenden Ansprüche, wobei das Kühlmodul (10) konfiguriert ist, um anhand des kryogenen Fluids ein gasförmiges Fluid zum Speisen einer Turbine (30) zu liefern.

4. System nach einem der vorstehenden Ansprüche, wobei das System (1) ein Heizmodul (20) umfasst, das konfiguriert ist, um von einem Wärmeaustauschmodul (9) einen gasförmigen Fluidstrom (F5) zu empfangen und denselben zu einer Turbine (30) zu leiten, oder um von einem Luftlenkmodul (7) einen verdichteten Luftstrom (F2) zu empfangen, der erhitzt werden soll, und denselben zu einem Klimatisierungsmodul (40) der Kabine des Flugzeugs zu leiten.

5. System nach einem der vorstehenden Ansprüche, wobei das System (1) ein Wärmeaustauschmodul (9) umfasst, das zwischen dem Luftverdichtungsmodul (5) und dem Kühlmodul (10) angeordnet ist, das konfiguriert ist, um den vom Luftverdichtungsmodul (5) empfangenen verdichteten Luftstrom (F2) anhand des vom Kühlmodul (10) gelieferten gasförmigen Fluidstroms (F5) zu kühlen und einerseits den so gekühlten verdichteten Luftstrom (F3) zum Kühlmodul (10), und andererseits den gasförmigen Fluidstrom (F5) zum Heizmodul (20) zu leiten.

6. System nach einem der vorstehenden Ansprüche, wobei das System (1) ein Modul zum Lenken eines Luftstroms (7) umfasst, das zwischen dem Verdichtungsmodul (5) und dem Kühlmodul (10) angeordnet und konfiguriert ist, um den vom Luftverdichtungsmodul (5) verdichteten Luftstrom (F2) zum Luftkühlmodul (10) zu lenken, wenn die Temperatur der verdichteten Luft höher ist als die Temperatur, die am Eingang eines Klimatisierungsmoduls (40) der Kabine benötigt wird, oder zum Heizmodul (20), wenn die Temperatur der verdichteten Luft niedriger ist als die Temperatur, die am Eingang eines Klimatisierungsmoduls (40) der Kabine benötigt wird.

7. Flugzeug, **dadurch gekennzeichnet, dass** es ein System nach einem der Ansprüche 1 bis 6 umfasst.

## Claims

1. Air conditioning system for a pressurised cabin of an aircraft, said system (1) comprising an air withdrawal module (3) configured for withdrawing ambient air from outside the aircraft, an air compression module (5) configured for compressing the withdrawn air flow (F1) and an air cooling module (10), **characterized in that** the air cooling module (10) is configured for cooling the compressed air flow (F2, F3) by means of a cryogenic fluid, the cooling module (10) comprising a condenser (12) for condensing water from the air flow, a water extractor (13) for extracting said water, a cooler (14) for cooling the dry air flow emitted by the water extractor (13) and a tank (15) for a cryogenic fluid, by means of which fluid the water from the air flow is condensed in the condenser (12) and the dry air emitted by the extractor is cooled in the cooler (14).

2. System according to claim 1, wherein the cooling module (10) is self-contained.

3. System according to either of the preceding claims, wherein the cooling module (10) is configured for delivering a gaseous fluid for supply to a turbine (30) by means of the cryogenic fluid.

4. System according to any of the preceding claims, said system (1) comprising a heating module (20) configured for receiving, from a thermal exchange module (9), a flow of gaseous fluid (F5) and for routing said flow towards a turbine (30), or for receiving, from the air orientation module (7), a compressed air flow (F2) to be reheated and for routing said flow towards an air conditioning module (40) of the cabin of the aircraft.

5. System according to any of the preceding claims, said system (1) comprising a thermal exchange module (9) arranged between the air compression module (5) and the cooling module (10) and configured for cooling the compressed air flow (F2) received from the air compression module (5) by means of the flow of gaseous fluid (F5) delivered by the cooling module (10), and for routing, on the one hand, the compressed air flow thus cooled (F3) towards the cooling module (10) and, on the other hand, the flow of gaseous fluid (F5) towards the heating module (20).

6. System according to any of the preceding claims, said system (1) comprising an air flow orientation module (7) arranged between the compression module (5) and the cooling module (10) and configured for orienting the air flow (F2) compressed by the air compression module (5) towards the air cooling module (10) when the temperature of the compressed air is greater than the temperature required at the inlet of an air conditioning module (40) of the cabin, or towards the heating module (20) when the temperature of the compressed air is lower than the temperature required at the inlet of an air conditioning module (40) of the cabin.

7. Aircraft **characterised in that** it comprises a system according to any of claims 1 to 6.
